# EUROPÄISCHE PATENTSCHRIFT

(11) **EP 2 700 140 B1**
(45) Veröffentlichungstag und Bekanntmachung des Hinweises auf die Patenterteilung: **14.09.2016**
(21) Anmeldenummer: 12717179.1
(22) Anmeldetag: 27.03.2012
(51) Int. Cl.: H02J 5/00, H02J 7/02, H02J 13/00, H01F 38/14, B60L 11/18, B60L 5/00, B61B 13/04

(54) **SYSTEM ZUR INDUKTIVEN ENERGIE-ÜBERTRAGUNG AN EINEN VERBRAUCHER**
SYSTEM FOR THE INDUCTIVE ENERGY TRANSMISSION TO AN ELECTRICAL LOAD
SYSTÈME DE TRANSMISSION INDUCTIVE D'ÉNERGIE À UN RÉCEPTEUR ÉLECTRIQUE

(30) Priorität: 21.04.2011 DE 102011018633
(43) Veröffentlichungstag der Anmeldung: 26.02.2014
(73) Patentinhaber: Sew-Eurodrive GmbH & Co. KG, 76646 Bruchsal (DE)
(72) Erfinder: SLISKOVIC, Maja, 76275 Ettlingen (DE)
(86) Internationale Anmeldenummer: PCT/EP2012/001328
(87) Internationale Veröffentlichungsnummer: WO 2012/143082

(56) Entgegenhaltungen:
- DE-A1-102006 025 460
- DE-A1-102009 009 214
- DE-A1-102009 018 563
- US-B1- 6 252 386

## Beschreibung

Die Erfindung betrifft ein System zur induktiven Energie-Übertragung an einen Verbraucher.

Es ist bekannt, Energie von einem Primärleitersystem an einen Verbraucher über eine induktive Kopplung zu übertragen.

Aus der DE 10 2006 025 460 A1 Ist als nächstliegender Stand der Technik eine Anlage zur induktiven Energieübertragung an ein Fahrzeug mit Übertragerkopf bekannt, der eine Sekundärwicklung aufweist.

Aus der DE 10 2009 018 563 A1 ist eine Anlage mit Primärleitersystem zur induktiven Versorgung eines Fahrzeugs bekannt.

Aus der DE 10 2009 009 214 A1 ist ein Verfahren zum Betreiben einer Anlage zur induktiven Versorgung von Fahrzeugen bekannt.

Der Erfindung liegt daher die Aufgabe zugrunde, eine störungsfreie Datenübertragung zu ermöglichen, insbesondere bei einem System zur induktiven Energie-Übertragung, wo ein Starkstrom auf dem Primärleitersystem eingeprägt wird.

Erfindungsgemäß wird die Aufgabe bei dem System nach den in Anspruch 1 angegebenen Merkmalen gelöst.

Wichtige Merkmale der Erfindung sind, dass bei dem System zur induktiven Energie-Übertragung an einen Verbraucher der Verbraucher eine Sekundärwicklung aufweist, die an ein Primärleitersystem induktiv gekoppelt ist,
wobei der Verbraucher eine Wicklungsanordnung aufweist, welche eine erste Teilwicklung und zumindest eine weitere Teilwicklung aufweist,
wobei die erste Teilwicklung in einem Raumbereich angeordnet ist, in welchem das vom Primärleitersystem erzeugte Magnetfeld im Wesentlichen entgegengesetzt gerichtet ist zum vom Primärleitersystem erzeugten Magnetfeld in demjenigen Raumbereich, in welchem die weitere Teilwicklung angeordnet ist,
wobei erste und die weitere beziehungsweise die weiteren Teilwicklungen jeweils eine derartige Wicklungszahl, einen derartigen Wicklungssinn und eine derartige umwickelte Fläche aufweisen, dass die in der ersten und in der weiteren beziehungsweise den weiteren Teilwicklungen von einem im Bereich der Wicklungsanordnung homogenen Wechselmagnetfeld induzierten Spannungen entgegengesetzt gleich groß sind, insbesondere und die vom Primärleitersystem induzierten Spannungen gleich groß sind.

Von Vorteil ist dabei, dass die Daten höherfrequent als der mittelfrequente eingeprägte Stromanteil aufmodulierbar sind und die Datensignale induktiv zwischen Primärleitersystem und Wicklungsanordnung übertragbar sind. Dabei ist das Abtrennen der höherfrequenten Datensignale von der Mittelfrequenz mittels Bandpassfiltern ermöglicht. Durch die Ausführung der Wicklung in Teilwicklungen ist sogar die Wirkung eines homogenen Wechselmagnetfelds eliminierbar, indem in den unterschiedlichen Teilwicklungen betragsgleiche Spannungen induzierbar und somit an der Wicklungsanordnung insgesamt eine Nullspannung induziert wird. Somit ist also eine Datenübertragung ausführbar, bei der das Fernfeld von Sendern eliminierbar ist, sogar auch dann, wenn diese die gleiche Frequenz zur Datenübertragung nutzen wie bei der Datenübertragung zwischen Primärleitersystem und Wicklungsanordnung verwendet ist. Denn das Fernfeld wirkt im Bereich der Übertragung zwischen Primärleitersystem und Wicklungsanordnung wie ein homogenes, also in die gleiche Richtung orientiertes Wechselmagnetfeld. Zeitabhängig ist dabei das Feld auch in die entgegengesetzte Richtung gerichtet.

Bei einer vorteilhaften Ausgestaltung weisen die erste und die weitere beziehungsweise die weiteren Teilwicklungen dieselbe Wicklungszahl und/oder denselben umwickelten Flächenbetrag auf und/oder die weitere beziehungsweise die weiteren Teilwicklungen weist beziehungsweise weisen einen zur ersten Teilwicklung entgegengesetzten Wicklungssinn auf. Von Vorteil ist dabei, dass eine einfache Herstellung ermöglicht ist, insbesondere ist die Wicklungsanordnung auf einer Multilayer-Leiterplatte als Flachwicklung herstellbar.

Bei einer vorteilhaften Ausgestaltung ist das Primärleitersystem langgestreckt verlegt, insbesondere wobei der Verbraucher als Fahrzeug ausgeführt ist und entlang dem Primärleitersystem verfahrbar ist. Von Vorteil ist dabei, dass die Energie an einen bewegbaren Verbraucher übertragbar ist und das Fahrzeug entlang einer Bahnkurve fahrbar ist.

Bei einer vorteilhaften Ausgestaltung wird in das Primärleitersystem ein mittelfrequenter Strom, insbesondere mit einer Frequenz zwischen 10 kHz und 1000 kHz, eingeprägt und zur Datenübertragung ein höher frequenter Stromanteil aufmoduliert. Von Vorteil ist dabei, dass hohe Leistungen übertragbar sind, da IGBT oder MOSFET Leistungshalbleiterschalter verwendbar sind.

Bei einer vorteilhaften Ausgestaltung weist der Verbraucher eine Sekundärwicklung auf, welche induktiv an das Primärleitersystem gekoppelt angeordnet ist und welcher eine Kapazität derart in Reihe oder parallel zugeschaltet ist, dass die zugehörige Resonanzfrequenz im Wesentlichen der Frequenz des eingeprägten mittelfrequenten Stroms entspricht. Von Vorteil ist dabei, dass auch bei Abstandsänderungen nur geringe Änderungen des Wirkungsgrades auftreten.

Bei einer vorteilhaften Ausgestaltung ist die Wicklungsanordnung eben angeordnet, insbesondere In der das Primärleitersystem oder zumindest den hinleitenden Teil des Primärleitersystems enthaltenden Ebene oder in einer zu dieser Ebene parallel angeordneten Ebene. Von Vorteil ist dabei, dass eine einfache Herstellung der Wicklungsanordnung ermöglicht ist, indem eine Multilayer-Leiterplatte verwendet wird und die Teilwicklungen als Flachwicklungen auf der Leiterplatte ausgeführt werden.

Bei einer vorteilhaften Ausgestaltung ist die erste Teilwicklung in der von dem Primärleitersystem umwickelten Fläche oder in einer hierzu parallel angeordneten Fläche angeordnet. Von Vorteil ist dabei, dass die Wicklungsanordnung einfach herstellbar ist.

Bei einer vorteilhaften Ausgestaltung ist die Wicklungsanordnung über einen Switch wahlweise mit einer Receiver oder Transmitter-Schaltung verbindbar,

insbesondere wobei jeder Teilwicklung eine Transmitter-Schaltung zugeordnet ist, wobei zumindest zwei Transmitter-Schaltungen Signale mit zueinander entgegengesetzter Phase einspeisen, also mit 180° Phasenverschiebung. Von Vorteil ist dabei, dass wahlweise Daten sendbar oder empfangbar sind.

Bei einer vorteilhaften Ausgestaltung weist die Receiver-Schaltung und/oder die Transmitter-Schaltung einen Hochpass oder Bandpass auf, insbesondere zur Separation des aufmodulierten Stromanteils vom mittelfrequenten Stromanteil. Von Vorteil ist dabei, dass eine Abtrennung des Datensignalstroms vom zur Leistungsübertragung verwendeten Stromanteil ausgeführt wird.

Bei einer vorteilhaften Ausgestaltung weisen die Teilwicklungen einen Kern aus Ferrit, einen ferromagnetischen Kern oder einen Kern aus paramagnetischem Material auf. Von Vorteil ist dabei, dass die Kopplung verbesserbar ist und somit ein verbessertes Signal- Rausch-Verhältnis erreichbar ist.

Weitere Vorteile ergeben sich aus den unteransprüchen.

Die Erfindung wird nun anhand von schematischen Abbildungen näher erläutert:
In der Figur 1 ist ein erstes erfindungsgemäßes Ausführungsbeispiel gezeigt.

In der Figur 2 ist ein zweites erfindungsgemäßes Ausführungsbeispiel gezeigt.

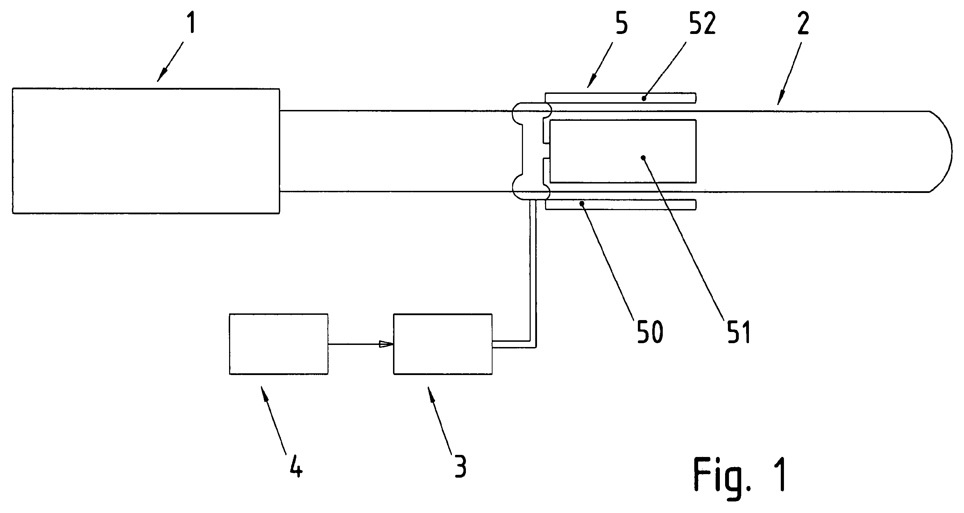

Wie in Figur 1 gezeigt, wird ein Primärleitersystem 2 von einer Wechselstromquelle 1 gespeist, die vorzugsweise als Mittelfrequenzquelle ausgeführt ist mit oder ohne aufmodulierte höher frequente Stromanteile. Dabei wird eine Mittelfrequenz zwischen 10 kHz und 1000 kHz bevorzugt verwendet.

Das Magnetfeld des Primärleitersystems ist im von der Schleife umwickelten Bereich in eine andere Richtung gerichtet als außerhalb der Schleife.

Ein Fahrzeug ist entlang dem langgestreckt verlegten Primärleitersystem bewegbar. Das Primärleitersystem 2 weist dabei einen langgestreckt verlegten Hinleiter und einen langgestreckt verlegten Rückleiter auf.

Das Fahrzeug weist eine in Figur 1 nicht gezeigte Sekundärwicklung auf, welche induktiv angekoppelt ist an das Primärleitersystem. Somit ist das Fahrzeug induktiv versorgbar aus dem stationären Teil der Anlage. Hierzu ist der Sekundärwicklung eine Kapazität derart in Reihe oder parallel zugeschaltet, dass die zugehörige Resonanzfrequenz des so gebildeten Schwingkreises im Wesentlichen der Mittelfrequenz entspricht.

Außerdem weist das Fahrzeug eine Wicklungsanordnung auf, die aus Teilwicklungen zusammengesetzt ist.

Dabei ist eine erste Teilwicklung von einem anders gerichteten, von dem Strom des Primärleitersystems erzeugten Magnetfeld durchflutet als eine zweite Teilwicklung. Beispielsweise sind die Magnetfeldrichtungen entgegengesetzt gerichtet.

Die Windungszahl und die umwickelte Fläche der Teilwicklungen ist dabei derart gewählt, dass die vom Strom im Primärleiter induzierten Spannungen gleich groß sind und sich aufsummieren. Allerdings sind die Vorzeichen der in den Teilwicklungen von einem homogenen Hintergrundwechselmagnetfeld induzierten Spannungen verschieden, so dass hiervon keine Ausgangs-Spannung induziert wird an der Wicklungsanordnung. Somit ist ein Betreiben der Wicklungsanordnung unabhängig vom Hintergrundwechselmagnetfeld ermöglicht. Die vom Primärstrom des Primärleitersystems induzierte Spannung wird sogar verdoppelt, so dass schwache aufmodulierte hochfrequente Stromanteile besonders gut detektierbar sind, also mit einem guten Signal-Rausch-Verhältnis.

Vorzugsweise sind die umwickelten Flächen gleich groß gewählt und die Wicklungszahlen ebenfalls gleich. Alternativ sind auch statt einer zweiten Teilwicklung die in Figur 1 gezeigte zweite und dritte Teilwicklung (50, 52) einsetzbar, wobei die zweite und dritte Teilwicklung (50, 52) zusammengeschaltet werden, so dass die induzierten Spannungen sich addieren. Vorzugsweise werden zweite und dritte Teilwicklung (50, 52) mit derselben Wicklungszahl ausgeführt und mit derselben umwickelten Fläche, die jeweils halb so groß ist wie die von der ersten Teilwicklung umwickelte Fläche. Ein über den gesamten Bereich der Wicklungsanordnung homogenes Feld induziert somit in der ersten Teilwicklung dieselbe Spannung wie in den restlichen Teilwicklungen. Die Summenspannung ist daher Null oder zumindest im Wesentlichen Null.

Die erste Teilwicklung ist dabei im von dem Primärleitersystem umwickelten Bereich angeordnet und die anderen Teilwicklungen in dem Bereich außerhalb des Primärleitersystems, wo die Magnetfeldrichtung entgegengesetzt gerichtet ist.

Die Wicklungsanordnung ist vorzugsweise eben ausgeführt, also die Teilwicklungen als ebene Wicklungen. Die Ebene weist einen Abstand auf zu der von dem ebenfalls eben verlegten Primärleitersystem aufgespannten Ebene. Somit ist die Wicklungsanordnung entlang dem Primärleitersystem verfahrbar in einem entsprechenden Abstand.

Zum Übertragen von Daten ist am Fahrzeug eine Transmit-Anpassschaltung 3 angeordnet, welche die Wicklungsanordnung mit einem von einer Hochfrequenzquelle 4, welche mit der Transmit-Anpassschaltung 3 verbunden ist, speist.

Dabei sind gemäß Figur 1 zweite und dritte Teilwicklung (50, 52) mit einem anderen Wicklungssinn ausgeführt als die erste Teilwicklung 51.

Die Wicklungsanordnung ist zum Senden von Daten mit zumindest einer Transmit-Schaltung verbunden und zum Empfangen von Daten mit zumindest einer Receiver-Schaltung verbunden, insbesondere mittels eines Switch zur wahlweisen Verbindung..

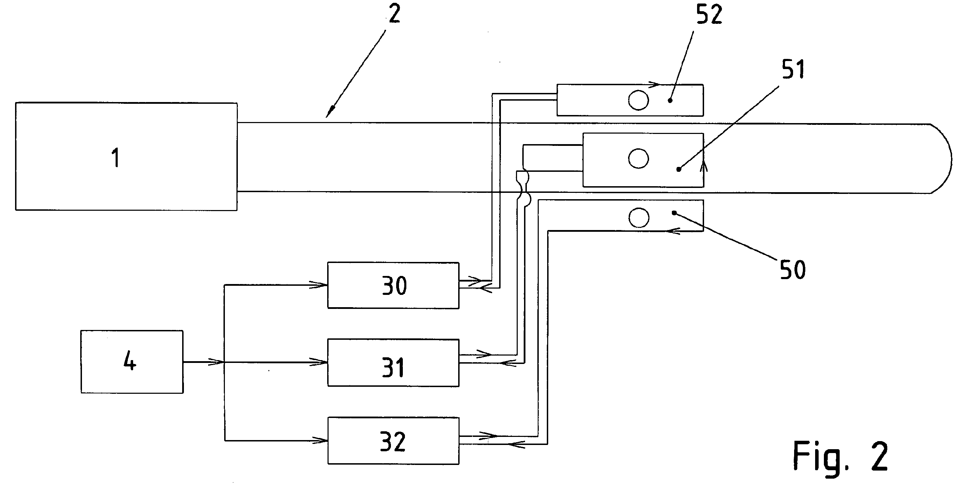

Wie in Figur 2 gezeigt, ist aber auch jeder Teilwicklung eine jeweilige Transmit-Schaltung (30, 31, 32) zuordenbar, die das Sendesignal verstärkt, die Impedanzanpassung macht und die den jeweiligen, für die Teilwicklung vorgesehenen hochfrequenten Strom einspeisbar macht.

Dabei erzeugt jede Transmit-Schaltung (30, 31, 32) einen entsprechend phasenverschobenen Strom, so dass die jeweilige Teilwicklung mit einem jeweiligen Strom derart beaufschlagbar ist, dass eine starke Einkopplung der hochfrequenten Datensignale ermöglicht ist.

Statt der Transmit-Schaltung (30, 31, 32) ist auch eine Receiver-Schaltung verbindbar mit der Wicklungsanordnung, insbesondere über den in der Figur 2 nicht gezeigten Switch.

Beim Senden der Datensignale erzeugen die erste Teilwicklung und die weiteren Teilwicklungen ein jeweils zueinander entgegengesetzt gerichtetes Magnetfeld. Auf diese Weise ist eine stärkere induktive Einkopplung in das Primärleitersystem erreichbar. Denn die erste Teilwicklung liegt im umwickelten Bereich des Primärleitersystems oder etwas beabstandet hierzu und die weiteren Teilwicklungen liegen in derselben Ebene aber außerhalb dem Primärleitersystem, so dass dort diejenigen Feldlinien, welche durch die umwickelte Fläche der ersten Teilwicklung hindurchtreten im Bereich der weiteren Teilwicklungen entgegengesetzt gerichtet sind.

Bei weiteren erfindungsgemäßen Ausführungsbeispielen wird die Wicklungsanordnung auch als Sekundärwicklung zur Versorgung des Fahrzeugs, insbesondere des Antriebs des Fahrzeugs, verwendet.

Bei weiteren erfindungsgemäßen Ausführungsbeispielen wird statt des bewegbar angeordneten Fahrzeugs eine nicht bewegbare Anordnung realisiert. Hierzu wird statt des Fahrzeugs ein Verbraucher induktiv über die induktive Kopplung zwischen Primärleitersystem und Sekundärwicklung des Verbrauchers versorgt, wobei auch Daten aufmodulierbar sind und die Wicklungsanordnung vorzugsweise als Sekundärwicklung verwendet wird. Somit ist zum Anschließen an die Energieversorgung nur ein Einlegen eines Primärleiterabschnitts in einen Aufnahmebereich des Verbrauchers notwendig, wobei der Aufnahmebereich des Verbrauchers benachbart ist zum Bereich der Sekundärwicklung.

### Bezugszeichenliste

- 1: Wechselstromquelle, insbesondere Mittelfrequenzquelle mit oder ohne aufmodulierte höher frequente Stromanteile
- 2: Primärleitersystem
- 3: Transmit-Anpassschaltung
- 4: Hochfrequenzquelle
- 30: zweite Transmit-Anpassschaltung
- 31: erste Transmit-Anpassschaltung
- 32: dritte Transmit-Anpassschaltung
- 50: zweite Teilwicklung
- 51: erste Teilwicklung
- 52: dritte Teilwicklung

## Patentansprüche

1. System zur induktiven Energie-Übertragung an einen Verbraucher,
wobei das System den Verbraucher und ein Primärleitersystem (2) enthält,
wobei der Verbraucher eine Sekundärwicklung aufweist, die an das Primärleitersystem (2) induktiv gekoppelt ist,
wobei
der Verbraucher eine Wicklungsanordnung aufweist, welche eine erste Teilwicklung (51) und zumindest eine weitere Teilwicklung (50) aufweist,
**dadurch gekennzeichnet, dass**
die erste Teilwicklung (51) in einem Raumbereich angeordnet ist, in welchem ein vom Primärleitersystem erzeugtes Wechselmagnetfeld im Wesentlichen entgegengesetzt gerichtet ist zum vom Primärleitersystem erzeugten Wechselmagnetfeld in demjenigen Raumbereich, in welchem die weitere Teilwicklung (50) angeordnet ist,
wobei erste und die weitere beziehungsweise die weiteren Teilwicklungen jeweils eine derartige Wicklungszahl, einen derartigen Wicklungssinn und eine derartige umwickelte Fläche aufweisen, dass die in der ersten und in der weiteren beziehungsweise den weiteren Teilwicklungen (50, 52) von dem im Bereich der Wicklungsanordnung vorhandenen Wechselmagnetfeld induzierten Spannungen entgegengesetzt gleich groß sind.

2. System nach Anspruch 1,
wobei die erste und die weitere beziehungsweise die weiteren Teilwicklungen (50, 52) dieselbe Wicklungszahl und/oder denselben umwickelten Flächenbetrag aufweisen und/oder die weitere beziehungsweise die weiteren Teilwicklungen (50, 52) einen zur ersten Teilwicklung (51) entgegengesetzten Wicklungssinn aufweist beziehungsweise aufweisen.

3. System nach mindestens einem der vorangegangenen Ansprüche,
**dadurch gekennzeichnet, dass**
das Primärleitersystem langgestreckt verlegt ist, wobei der Verbraucher als Fahrzeug ausgeführt ist und entlang dem Primärleitersystem (2) verfahrbar ist.

4. System nach mindestens einem der vorangegangenen Ansprüche,
**dadurch gekennzeichnet, dass**
in das Primärleitersystem ein mittelfrequenter Strom eingeprägt wird und zur Datenübertragung ein höher frequenter Stromanteil aufmoduliert wird.

5. System nach Anspruch 4,
**dadurch gekennzeichnet, dass**
die Wicklungsanordnung über einen Switch wahlweise mit einer Receiver oder Transmitter-Schaltung verbindbar ist.

6. System nach Anspruch 5,
**dadurch gekennzeichnet, dass**
die Receiver-Schaltung einen Hochpass oder Bandpass aufweist zur Separation des aufmodulierten Stromanteils vom mittelfrequenten Stromanteil.

7. System nach Anspruch 4,
**dadurch gekennzeichnet, dass**
der Sekundärwicklung eine Kapazität derart in Reihe oder parallel zugeschaltet ist, dass die zugehörige Resonanzfrequenz im Wesentlichen der Frequenz des eingeprägten mittelfrequenten Stroms entspricht.

8. System nach mindestens einem der vorangegangenen Ansprüche,
**dadurch gekennzeichnet, dass**
die Wicklungsanordnung in der das Primärleitersystem (2) enthaltenden Ebene angeordnet ist oder in einer zu dieser Ebene parallel angeordneten Ebene.

9. System nach mindestens einem der vorangegangenen Ansprüche,
**dadurch gekennzeichnet, dass**
die erste Teilwicklung (51) in der von dem Primärleitersystem (2) umwickelten Fläche oder in einer hierzu parallel angeordneten Fläche angeordnet ist.

10. System nach mindestens einem der vorangegangenen Ansprüche,
**dadurch gekennzeichnet, dass**
jeder Teilwicklung eine Transmiher-Schaltung zugeordnet ist, wobei zumindest zwei Transmitter-Schaltungen Signale mit zueinander entgegengesetzter Phase einspeisen, also mit 180° Phasenverschiebung.

11. System nach mindestens einem der vorangegangenen Ansprüche,
**dadurch gekennzeichnet, dass**
die Teilwicklungen einen Kern aus Ferrit, einen ferromagnetischen Kern oder einen Kern aus paramagnetischem Material aufweisen.

## Claims

1. A system for inductive transmission of energy to a consumer,
wherein the system contains the consumer and a primary conductor system (2),
wherein the consumer has a secondary winding which is inductively coupled to the primary conductor system (2),
wherein
the consumer has a winding arrangement which has a first part winding (51) and at least one further part winding (50),
**characterised in that**
the first part winding (51) is arranged in a spatial region in which an alternating magnetic field generated by the primary conductor system is directed substantially inversely to the alternating magnetic field generated by the primary conductor system **in that** spatial region in which the further part winding (50) is arranged,
the first and the further part winding, or the further part windings, in each case having such a number of windings, such a sense of winding and such a surface surrounded by the windings that the voltages induced in the first and in the further part winding, or the further part windings (50, 52), by the alternating magnetic field present in the region of the winding arrangement are of the same amplitude but inverse.

2. A system according to Claim 1,
wherein the first and the further part winding, or the further part windings (50, 52), have the same number of windings and/or the same surface area surrounded by the windings,
and/or the further part winding, or the further part windings (50, 52), has or have a sense of winding inverse to the first part winding (51).

3. A system according to at least one of the preceding claims,
**characterised in that**
the primary conductor system is laid in elongate manner, the consumer being embodied as a vehicle and being able to be moved along the primary conductor system (2).

4. A system according to at least one of the preceding claims,
**characterised in that**
a medium-frequency current is injected into the primary conductor system and a higher-frequency current portion is modulated for data transmission.

5. A system according to Claim 4,
**characterised in that**
the winding arrangement can be connected via a switch either to a receiver circuit or to a transmitter circuit.

6. A system according to Claim 5,
**characterised in that**
the receiver circuit has a high pass or band pass for separating the modulated current portion from the medium-frequency current portion.

7. A system according to Claim 4,
**characterised in that**
a capacitor is connected in series or in parallel to the secondary winding such that the associated resonant frequency corresponds substantially to the frequency of the injected medium-frequency current.

8. A system according to at least one of the preceding claims,
**characterised in that**
the winding arrangement is arranged in the plane containing the primary conductor system (2) or in a plane arranged parallel to this plane.

9. A system according to at least one of the preceding claims,
**characterised in that**
the first part winding (51) is arranged in the surface surrounded by the windings of the primary conductor system (2) or in a surface arranged parallel thereto.

10. A system according to at least one of the preceding claims,
**characterised in that**
a transmitter circuit is associated with each part winding, with at least two transmitter circuits feeding in signals with phases inverse to each other, i.e. with 180° phase shift.

11. A system according to at least one of the preceding claims,
**characterised in that**
the part windings have a core made of ferrite, a ferromagnetic core or a core made of paramagnetic material.

## Revendications

1. Système de transmission d'énergie par induction à un consommateur,
le système comprenant le consommateur et un système de conducteur primaire (2),
le consommateur présentant un enroulement secondaire qui est couplé par induction au système de conducteur primaire (2),
le consommateur présentant un agencement d'enroulements qui présente un premier enroulement partiel (51) et au moins un autre enroulement partiel (50),
**caractérisé en ce que**
le premier enroulement partiel (51) est disposé dans une zone de l'espace dans laquelle le champ magnétique alternatif produit par le système de conducteur primaire est orienté sensiblement en sens inverse par rapport au champ magnétique alternatif produit par le système de conducteur primaire dans la zone de l'espace dans laquelle l'autre enroulement partiel (50) est disposé,
le premier et l'autre ou les autres enroulements partiels présentant chacun un nombre d'enroulements tel, un sens de bobinage tel et une surface bobinée telle que les tensions induites dans le premier et dans l'autre ou les autres enroulements partiels (50, 52) par le champ magnétique alternatif présent dans la zone de l'agencement d'enroulements sont opposées et de même valeur.

2. Système selon la revendication 1,
dans lequel le premier et l'autre ou les autres enroulements partiels (50, 52) présentent le même nombre d'enroulements et/ou la même surface bobinée et/ou l'autre ou les autres enroulements partiels (50, 52) présente ou présentent un sens de bobinage inversé par rapport au premier enroulement partiel (51).

3. Système selon au moins l'une des revendications précédentes,
**caractérisé en ce**
**que** le système de conducteur primaire est posé de manière étendue en longueur, le consommateur étant réalisé sous la forme d'un véhicule et étant déplaçable le long du système de conducteur primaire (2).

4. Système selon au moins l'une des revendications précédentes,
**caractérisé en ce**
**qu'**un courant à moyenne fréquence est injecté dans le système de conducteur primaire et modulé par une composante de courant à plus haute fréquence pour la transmission de données.

5. Système selon la revendication 4,
**caractérisé en ce**
**que** l'agencement d'enroulements peut être relié au choix, au moyen d'un commutateur, à un circuit de réception ou de transmission.

6. Système selon la revendication 5,
**caractérisé en ce**
**que** le circuit de réception présente un filtre passe-haut ou un filtre passe-bande pour la séparation de la composante de courant modulée de la composante de courant à moyenne fréquence.

7. Système selon la revendication 4,
**caractérisé en ce**
**qu'**une capacité est couplée en série ou en parallèle avec l'enroulement secondaire de façon que la fréquence de résonance associée corresponde sensiblement à la fréquence du courant à moyenne fréquence injecté.

8. Système selon au moins l'une des revendications précédentes,
**caractérisé en ce**
**que** l'agencement d'enroulements est disposé dans le plan contenant le système de conducteur primaire (2) ou dans un plan disposé parallèlement à ce plan.

9. Système selon au moins l'une des revendications précédentes,
**caractérisé en ce**
**que** le premier enroulement partiel (51) est disposé dans la surface bobinée avec le système de conducteur primaire (2) ou dans une surface disposée parallèlement à celle-ci.

10. Système selon au moins l'une des revendications précédentes,
**caractérisé en ce**
**qu'**à chaque enroulement partiel est associé un circuit de transmission, au moins deux circuits de transmission injectant des signaux en opposition de phase, donc avec un déphasage de 180°.

11. Système selon au moins l'une des revendications précédentes,
**caractérisé en ce**
**que** les enroulements partiels présentent un noyau en ferrite, un noyau ferromagnétique ou un noyau en matériau paramagnétique.
